# EUROPÄISCHE PATENTSCHRIFT

(11) **EP 2 157 304 B1**
(45) Veröffentlichungstag und Bekanntmachung des Hinweises auf die Patenterteilung: **10.07.2013**
(21) Anmeldenummer: 09161118.6
(22) Anmeldetag: 26.05.2009
(51) Int. Cl.: B23P 9/00, F02F 1/20, F16J 10/04, B23B 1/00, B24B 19/02, B24B 33/02

(54) **Bearbeitungsverfahren zur Herstellung einer Lauffläche auf einer Zylinderwand eines Zylinderliners einer Hubkolbenbrennkraftmaschine, und Zylinderliner**
Method of machining for producing a bearing surface on a cylinder wall of a cylinder liner of an internal combustion engine, and cylinder liner
Procédé d'usinage destiné à produire une surface de roulement sur une paroi de cylindre d'une chemise de cylindre d'un moteur à combustion interne, et chemise de cylindre

(30) Priorität: 18.08.2008 EP 08162512
(43) Veröffentlichungstag der Anmeldung: 24.02.2010
(73) Patentinhaber: Wärtsilä Schweiz AG, 8401 Winterthur (CH)
(72) Erfinder: Amoser, Matthias, Dr., 8492, Wila (CH); Braun, Willi, 8200, Schaffhausen (CH); Nägeli, Johannes, 8472, Seuzach (CH)
(74) Vertreter: Sulzer Management AG

(56) Entgegenhaltungen:
- EP-B- 1 490 196
- WO-A-96/30159
- DE-C1- 19 833 646

## Beschreibung

Die Erfindung betrifft ein Bearbeitungsverfahren zur Herstellung einer Lauffläche auf einer Zylinderwand eines Zylinderliners einer Hubkolbenbrennkraftmaschine, insbesondere eines langsam laufenden Grossdieselmotors, sowie einen Zylinderliner gemäss dem Oberbegriff des unabhängigen Anspruchs der jeweiligen Kategorie.

Grossdieselmotoren werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit Brenn- und Betriebsstoffen zentrale Kriterien für den Betrieb der Maschinen. Unter anderem ist das Kolbenlaufverhalten solcher grossbohrigen langsam laufenden Dieselmotoren ein bestimmender Faktor für die Länge der Wartungsintervalle, die Verfügbarkeit und über den Schmiermittelverbrauch auch unmittelbar für die Betriebskosten und damit für die Wirtschaftlichkeit. Damit kommt der komplexen Problematik der Schmierung von Grossdieselmotoren eine immer grössere Bedeutung zu.

Bei Grossdieselmotoren, jedoch nicht nur bei diesen, erfolgt die Kolbenschmierung durch Schmiereinrichtungen im sich hin und her bewegenden Kolben oder in der Zylinderwand, durch die Schmieröl auf die Lauffläche der Zylinderwand aufgebracht wird, um die Reibung zwischen Kolben und Lauffläche und damit die Abnützung der Lauffläche und der Kolbenringe zu minimieren. So liegt heute bei modernen Motoren, wie z.B. den Wärtsilä Zweitakt Motoren, die Abnutzung der Lauffläche bei weniger als 0.05 mm bei einer Betriebsdauer von 1000 Stunden. Die Schmiermittelfördermenge liegt bei solchen Motoren bei ca. 1.3 g/kWh und weniger und soll nicht zuletzt aus Kostengründen möglichst noch weiter reduziert werden, wobei gleichzeitig der Verschleiss minimiert werden soll.

Als Schmiersysteme zur Schmierung der Laufflächen sind ganz verschiedene Lösungen bekannt, sowohl was die konkrete Ausführung der Schmiereinrichtungen selbst, als auch was die Verfahren zur Schmierung angeht. So sind Schmiereinrichtungen bekannt, bei denen das Schmieröl durch mehrere Schmiermittelöffnungen, die in Umfangsrichtung in der Zylinderwand untergebracht sind, auf den an der Schmiermittelöffnung vorbeilaufenden Kolben aufgebracht werden, wobei das Schmiermittel durch die Kolbenringe sowohl in Umfangsrichtung als auch in axialer Richtung verteilt wird. Dadurch, dass das Schmiermittel bei dieser Methode nicht grossflächig auf die Lauffläche der Zylinderwand, sondern mehr oder weniger punktuell zwischen die Kolbenringe auf die Seitenflächen des Kolbens aufgebracht wird, ist die Verteilung des Schmieröls auf der Lauffläche häufig nur ungenügend gewährleistet, was zu überhöhter Hitzeentwicklung infolge übermässiger Reibung und in letzter Konsequenz lokal zu einem Verschweissen der Kontaktflächen von Kolben und Lauffläche mit darauf folgendem Materialausbruch, also zu einem Kolbenfresser führen kann.

Um eine bessere Verteilung des Schmieröls, d.h. um einen gleichmässigeren Schmierölfilm auf der Lauffläche zu gewährleisten, wird beispielsweise in der WO 00/28194 ein Schmiersystem vorgeschlagen, bei welchem das Schmieröl unter hohem Druck mittels Zerstäubungsdüsen, die in den Zylinderwänden untergebracht sind, im wesentlichen tangential zur Zylinderwand in die im Brennraum befindliche Spülluft gesprüht wird, wobei das Schmieröl zu kleinen Partikeln zerstäubt wird. Dadurch wird das zerstäubte Schmieröl in der Spülluft fein verteilt und durch die Zentrifugalkraft des Dralls, den die Spülluft und damit auch die fein darin verteilten Schmierölpartikel tragen, gegen die Lauffläche der Zylinderwand geschleudert. Bei diesem Verfahren wird zwar ein deutlich gleichmässigerer Schmierölfim auf der Lauffläche erzeugt als bei radialer Schmieröleinspritzung; ein gravierender Nachteil dieses Verfahrens besteht allerdings darin, dass ein nicht unerheblicher Teil des eingesetzten Schmieröls mit der Spülluft weggetragen bzw. beim folgenden Verbrennungstakt mit verbrannt wird. Dadurch entsteht ein unnötig hoher Schmierölverbrauch, was sich deutlich negativ auf die Betriebskosten auswirkt.

Bei einem anderen Verfahren sind im sich bewegenden Kolben bevorzugt mehrere Schmiermitteldüsen untergebracht, so dass das Schmiermittel im wesentliche über die gesamte Höhe der Lauffläche an beliebigen Stellen aufgebracht werden kann.

Dabei ist neben der Art und Weise wie das Schmiermittel auf die Lauffläche der Zylinderwand aufgebracht wird auch die Dosierung des Schmiermittels ein zentraler Punkt. Die pro Zeit- und Flächeneinheit auf die Lauffläche aufzubringende Menge an Schmiermittel kann im Betrieb der Hubkolbenbrennkraftmaschine von vielen verschiedenen Parametern abhängig sein. So spielt beispielsweise die chemische Zusammensetzung des verwendeten Treibstoffs, insbesondere dessen Schwefelgehalt eine bedeutende Rolle. Neben der Schmierung des Zylinders, also der Herabsetzung der Reibung zwischen Kolben und Zylinderlauffläche, genauer zwischen den Kolbenringen und der Lauffläche der Zylinderwand, dient das Schmiermittel unter anderem auch zur Neutralisation aggressiver Säuren, insbesondere von schwefelhaltigen Säuren, die beim Verbrennungsvorgang im Brennraum des Motors entstehen. Daher können je nach verwendetem Treibstoff unterschiedliche Sorten von Schmiermittel zum Einsatz kommen, die sich unter anderem in ihrer Neutralisationsfähigkeit, für die der sogenannte BN-Wert des Schmiermittels ein Mass ist, unterscheiden. So kann es von Vorteil sein bei einem hohem Schwefelgehalt im Brennstoff ein Schmiermittel mit einem höheren BN-Wert zu verwenden, als bei einem Brennstoff mit einem niedrigeren Schwefelgehalt, weil ein Schmiermittel mit einem höheren BN-Wert eine stärkere Neutralisationswirkung gegenüber Säuren aufweist.

Oft ist es jedoch auch möglich, dass für Treibstoffe unterschiedlicher Qualität die gleiche Schmiermittelsorte verwendet werden muss. In solchen Fällen kann dann beispielsweise durch entsprechende Erhöhung oder Erniedrigung der eingesetzten Menge an Schmiermittel ein höherer oder niedrigerer Säuregehalt in den Verbrennungsprodukten kompensiert werden.

Ein weiteres Problem bei der Dosierung der aufzutragenden Schmiermittelmenge stellen zeitliche und / oder örtliche Schwankungen des Zustands des Schmiermittelfilms, insbesondere der Dicke des Schmiermittelfilms im Betriebszustand der Hubkolbenbrennkraftmaschine dar.

Selbstverständlich kann die notwendige Menge an Schmiermittel beispielsweise auch von unterschiedlichsten Betriebsparametern, wie der Drehzahl, der Verbrennungstemperatur, der Motortemperatur, der Kühlleistung zur Kühlung des Motors, der Last und vielen anderen Betriebsparametern mehr abhängig. So kann es möglich sein, dass bei gegebener Drehzahl und höherer Last eine andere Menge an Schmiermittel auf die Lauffläche des Zylinders aufgebracht werden muss, als bei gleicher Drehzahl und niedrigerer Last.

Des weiteren kann auch der Zustand der Verbrennungsmaschine an sich einen Einfluss auf die Schmiermittelmenge haben. So ist es beispielsweise bekannt, dass je nach Verschleisszustand von Zylinderlauffläche, Kolbenringen, Kolben und so weiter die einzusetzende Schmiermittelmenge stark variieren kann. So ist bei einem Zylinder mit einer neuen, noch nicht eingefahren Zylinderlauffläche und / oder bei neuen Kolbenringen in der Einlaufphase eine erhöhte Reibung in gewissem Umfang durchaus erwünscht, damit sich die Gegenlaufpartner, also z.B. Kolbenringe und Lauffläche, einschleifen und so optimal aufeinander einstellen können. Das kann unter anderem dadurch erreicht werden, dass in der Einlaufphase eines Zylinders pauschal mit einer anderen Schmiermittelmenge gearbeitet wird, als bei einem Zylinder, der bereits eine beachtliche Zahl von Betriebsstunden in Betrieb ist. Daher ist bei einer Maschine mit mehreren Zylindern die Schmiermittelmenge insbesondere für jeden Zylinder häufig separat einstellbar.

Auch wird im allgemeinen die Zylinderlauffläche sowohl in Umfangsrichtung als auch in Längsrichtung in Abhängigkeit von der Zahl der geleisteten Betriebsstunden unterschiedlich verschleissen. Das gilt analog beispielsweise auch für die Kolbenringe und die Kolben selbst.

Somit muss die Schmiermittelmenge bei einer Hubkolbenbrennkraftmaschine nicht nur in Abhängigkeit von der Zahl der geleisteten Betriebsstunden eingestellt werden, sondern die Schmiermittelmenge sollte auch innerhalb ein und desselben Zylinders an unterschiedlichen Stellen der Lauffläche der Zylinderwand je nach Anforderungen zeitabhängig und örtlich verschieden dosierbar sein.

Daher ist es seit langem bekannt in einer Lauffläche eines Zylinders oder im sich bewegenden Kolben in unterschiedlichen Bereichen Schmiermitteldüsen vorzusehen, die bevorzugt alle einzeln ansteuerbar sind, so dass die Schmiermittelmenge je nach Anforderung sowohl zeitlich als auch örtlich flexibel variiert werden kann.

Um die von einer bestimmten Schmiermitteldüse zu einem bestimmten Zeitpunkt einzubringende Menge an Schmiermittel zu ermitteln sind verschiedene Verfahren bekannt. In einfachen Fällen wird die Schmiermittelmenge, eventuell unter Berücksichtigung der Qualität des verwendeten Treibstoffs und des Schmiermittels selbst, einfach in Abhängigkeit vom Betriebszustand der Hubkolbenbrennkraftmaschine gesteuert, zum Beispiel als Funktion der Last oder der Drehzahl, wobei aufgrund von bereits geleisteten Betriebsstunden auch der Verschleisszustand der Gegenlaufpartner Berücksichtigung finden kann.

Dabei sind durchaus auch differenziertere Methoden zur Regulierung der Schmiermittelmenge bekannt. So wird beispielsweise in der CH 613 495 eine Zylindervorrichtung für eine Kolbenbrennkraftmaschine offenbart, die zur Verhütung des Fressens von Kolbenringen während des Betriebs abnormale Reibungszustände der Kolbenringe mittels eines Temperatur- oder Vibrationsfühlers detektiert und beim Auftreten solcher Störungen die Schmierölmenge, die von einer bestimmten Schmierstelle abgegeben wird, erhöht. Die EP 0 652 426 zeigt ein Verfahren, bei welchem durch zyklisches Messen der Temperatur in der Zylinderwand das Auftreten von Scuffing bzw. Verschleissfressen anhand eines dafür charakteristischen Temperaturverlaufs erkannt wird und einer entsprechenden Schädigung durch eine automatische Leistungsreduzierung und / oder durch Erhöhung der Schmiermittelzufuhr entgegengewirkt wird. Eine weitere bekannte Methode zum frühzeitigen Erkennen von kritischen Betriebszuständen einer Brennkraftmaschine ist die in der EP 1 006 271 gezeigt Ultraschallmethode, bei welcher mittels in einem Zylinder angeordneten Ultraschallwandlers der Gegenlaufpartner mit Ultraschallsignalen beaufschlagt wird und die reflektierten Echosignale zur Bestimmung des Zustandes des Gegenlaufpartners herangezogen wird.

Wird beispielsweise bei einer aus dem Stand der Technik bekannten Vorrichtung in einem bestimmten Zylinder das Auftreten von Kolbenfressen oder Scuffing detektiert, so wird für diesen Zylinder die Schmiermittelmenge so lange erhöht, bis der detektierte abnormale Betriebszustand wieder verschwindet und die diesem Zylinder pro Zeiteinheit zugeführte Schmiermittelmenge wieder reduziert werden kann.

So unterscheidet der Fachmann den Bereich der sogenannten hydrodynamischen Schmierung, vom Zustand der Mangelschmierung und der Mischschmierung. Von hydrodynamischer Schmierung spricht man, wenn sich zwischen den Gegenlaufpartnern, also zum Beispiel zwischen der Lauffläche einer Zylinderwand und dem Kolbenring eines Kolbens ein Schmiermittelfilm von solcher Dicke ausgebildet ist, dass die Oberflächen der Gegenlaufpartner durch den Schmiermittelfilm voneinander wohl getrennt sind, so dass diese sich nicht berühren. Einen anderen Grenzfall stellt der sogenannte Zustand der Mischreibung oder Mischschmierung dar. Im Falle der Mischreibung ist der Schmiermittelfilm zwischen den Gegenlaufpartner, zumindest teilweise, so dünn, dass sich die Gegenlaufpartner unmittelbar berühren. In diesem Fall besteht die Gefahr von Scuffing und letztlich der Ausbildung eines Kolbenfressers. Zwischen diesen beiden Grenzfällen ist die sogenannte Mangelschmierung angesiedelt. Im Zustand der Mangelschmierung ist der Schmiermittelfilm gerade noch so dick, dass sich die Gegenlaufpartner nicht mehr berühren; die Schmiermittelmenge zwischen den Gegenlaufpartnern reicht jedoch nicht aus, dass sich eine hydrodynamische Schmierung aufbauen könnte. Im Stand der Technik wird sowohl der Zustand der Mischschmierung, als auch der Mangelschmierung möglichst verhindert. Das heisst, die Dicke des Schmiermittelfilms wird bevorzugt so gewählt, dass sich ein Zustand der hydrodynamischen Schmierung zwischen den Gegenlaufpartnern einstellt.

Der Betrieb im Bereich der hydrodynamischen Schmierung hat natürlich einen entsprechend hohen Schmiermittelverbrauch zur Folge. Das ist einerseits nicht nur ausgesprochen unwirtschaftlich, sondern es hat sich überraschenderweise auch gezeigt, dass nicht nur ein Schmiermittelmangel, sondern auch ein Schmiermittelüberschuss zu Schädigungen der Gegenlaufpartner im Zylinder führen kann.

Zur Lösung der zuvor beschriebenen komplexen Probleme im Zusammenhang mit der Zylinderschmierung sind im Stand der Technik zahlreiche Lösungsansätze vorgeschlagen, die zum Teil ineinander greifen und die Art des Aufbringens des Schmiermittels betreffen, sich mit der Kontrolle und der Regelung der Schmiermittelmenge befassen, optimierte Kolbendesigns, insbesondere die Optimierung von einzelnen Kolbenringen oder ganzer Kolbenringpackungen betreffen oder zum Beispiel versuchen über die chemische Zusammensetzung des Schmieröls oder des Treibstoffs das Schmiersystem und damit das Kolbenverhalten zu optimieren.

All diese Massnahmen laufen jedoch mehr oder weniger ins Leere, wenn die Lauffläche auf der Zylinderwand des Zylinderliners, mit der der Kolben über die Kolbenringpackungen bei seiner hin- und Herbewegung im Betriebszustand in reibendem Kontakt steht, nicht oder nur ungenügend geeignet ist, einen zuverlässigen Schmierfilm auf der Lauffläche auszubilden.

Daher ist die Herstellung der Lauffläche auf einer Zylinderwand eines Zylinderliners ein kritischer Punkt, dessen Beachtung zurecht zunehmend an Bedeutung gewinnt.

Die üblicherweise verwendeten Zylinderliner werden in der Regel durch ein wohlbekanntes Giessverfahren hergestellt, wodurch zunächst ein Zylinderliner Rohling bereit gestellt wird. Das Giessmaterial ist dabei geeignet mit Hartstoffen angereichert bzw. der Giess- und Abkühlvorgang wird in an sich bekannter Weise derart beeinflusst, dass sich beim Giessen und / oder beim Abkühlen des Zylinderliner Rohlings im Guss-Grundmaterial mehr oder weniger ausgedehnte Bereiche aus Hartphasen, die zum Beispiel an sich bekannte Karbide oder andere an sich bekannte Hartphasen umfassen können, ausbilden bzw. ausgeschieden werden. Diese Hartphasen bilden im Guss-Grundmaterial eine mehr oder weniger unregelmässige Verteilung oder Matrix, sodass eine vorteilhafte Kombination von relativ weichem Guss-Grundmaterial und Hartphasen entsteht. Das relativ weiche Guss-Grundmaterial stellt dabei zum Beispiel unter anderem eine gewisse mechanische Elastizität und Dauerfestigkeit des Zylinderliners sicher, so dass dieser den enormen Temperatur- und Druckschwankungsbelastungen im Betriebszustand der Brennkraftmaschine widerstehen kann. Die Hartphasen dagegen geben der Zylinderwand bzw. der Lauffläche des Zylinders eine genügend hohe Härte, insbesondere aber nicht nur, gegen übermässigen Verschleiss durch Reibung zwischen dem Kolben und der Zylinderlauffläche. Die verschiedenen Herstellungsverfahren dieser Art von Zylinderlinern und deren Eigenschaften sind dem Fachmann bestens bekannt und brauchen daher hier nicht näher erläutert zu werden.

Eine Innenwand des Zylinderliner Rohlings, die später die Lauffläche für den Kolben auf der Zylinderwand bilden soll, wird sodann in der Regel in mehreren aufwändigen Arbeitsschritten bearbeitet. Zunächst wird in einem Drehbearbeitungsschritt in der Zylinderwand in Umfangsrichtung eine kanalartige Grobstruktur mit umlaufenden Kanälen erzeugt, welche Grobstruktur sich entlang der Zylinderachse in der Zylinderwand des Zylinderliners schraubenförmig erstreckt. Wie dem Fachmann wohl bekannt ist, ist die kanalartige Grobstruktur dabei im wesentlichen unter anderem durch das verwendete Drehwerkzeug und die Vorschubgeschwindigkeit beeinflusst, wobei natürlich auch die Rotationsgeschwindigkeit des Drehwerkzeugs einen erheblichen Einfluss auf die Ausbildung der kanalartigen Grobstruktur haben kann.

Anschliessend kann die Zylinderlauffläche vor-gehont und finish-gehont und eventuell noch einem geeigneten finishing Verfahren unterzogen werden, so dass die Lauffläche eine feinere Struktur erhält. Ein entsprechendes aus dem Stand der Technik bekanntes Verfahren ist zum Beispiel in der

WO 96/30159 A1 eingehend beschrieben. WO 96/30159 A1 offenbart ein Verfahren gemäβ dem Oberbegriff des unabhängigen Anspruchs 1.

Legt man einen Längsschnitt entlang der Zylinderachse durch die Zylinderwand des Zylinderliners, so wird die Lauffläche eine mehr oder weniger stark ausgeprägte wellenartige Struktur entlang des Längsschnitts, also entlang der Richtung der Zylinderachse aufweisen.

Ein wesentliches Problem bei der mechanischen Bearbeitung des Zylinderliners, zum Beispiel beim Drehen oder Honen besteht darin, dass die Hartphasen, die einen tragenden teil der Lauffläche bilden und eine verhältnismässig grosse Ausdehnung von bis zu einigen zehntel Millimetern bis in den Millimeterbereich haben können, beim Bearbeiten ausbrechen können und dadurch Schädigungen der Lauffläche verursachen können, die sich tief, z.B. bis zu 1mm tief und mehr in die Lauffläche erstrecken können. Das ist besonders dann zu befürchten, wenn falsche, an die Materialstruktur nicht angepasste, oder schlechte oder abgenutzte Werkzeuge verwendet werden, oder Bearbeitungsparameter wie die Vorschubgeschwindigkeit oder die Rotationsgeschwindigkeit, eine Anpresskraft des Werkzeugs an die Lauffläche usw. falsch oder nicht angepasst gewählt werden.

Solche Schädigungen wirken sich, wie allgemein bekannt ist, sehr negativ auf die Bildung des Schmierölfilms auf der Lauffläche des Zylinders aus.

Wird dann die wellenartige Struktur beim Betrieb des Motors durch den Kolben über die bekannten Reibungsmechanismen nach und nach abgetragen, so erreicht der Kolben bzw. die Kolbenringe nach einer gewissen Laufzeit, die in der Grössenordnung von einigen tausend Betriebsstunden, beispielweise bei 16.000 Betriebsstunden liegen kann, die durch Ausbrüche geschädigten Wellentäler, was dann häufig dazu führt, dass aus der durch falsches Drehen oder Honen vorgeschädigten Zylinderwand beim betrieb des Motors weitere Hartphasen aber auch Guss-Grundmaterial herausgebrochen werden, die das Schmieröl dann verschmutzen und die Reibung zwischen Kolben und Lauffläche der Zylinderwand im schlimmsten Fall massiv erhöhen.

Um diese Probleme zu vermeiden wurde bisher unter einem vorgegeben Winkel die Zylinderlauffläche quer zur den Bergen und Tälern der in Längsrichtung des Zylinders verlaufenden wellenförmigen Struktur derart Quergehont, dass die wellenförmige Struktur im wesentlich vollständig abgetragen wurde, so dass nur die viel feineren Querfurchen, die durch das Querhonen entstanden sind, in der Lauffläche zurückbleiben. Dabei sind die entsprechenden bekannten Verfahren sehr zeitaufwendig. Nicht selten dauert die Bearbeitung eines einzigen Zylinderliners mit den bekannten Methoden viele Stunden. So benötigt zum Beispiel die Bearbeitung eines Zylinderliner Rohlings mit 96cm Innendurchmesser grössenordnungsmässig 10 Stunden, was natürlich entsprechende Werkzeugkapazitäten und Personal entsprechend lange an diesen Produktionsprozess bindet und letztlich zu hohen Produktionskosten führt

Ausserdem hat sich herausgestellt, dass durch das entfernen der wellenartigen Struktur zwar die Problematik des Ausbrechens der Hartphasen aus der Zylinderwand weitgehend in den Griff zu bekommen war, was jedoch zu Lasten verschiedener Eigenschaften des Schmierölfilms auf der Lauffläche geht, wodurch die vorgenannten Vorteile teuer erkauft werden.

Insbesondere wird dadurch insgesamt das Öl Rückhaltevolumen in der Lauffläche des Zylinderliners negativ beeinträchtigt, die notwendige Gleichmässigkeit des Ölfilms ist nicht mehr ausreichend gewährleistet und auch die dynamische Verteilung des Schmieröls über die Zylinderlauffläche ist stark behindert, bzw. zumindest asymmetrisch durch die Struktur der Querfurchen durch das Querhonen unvorteilhaft vorgegeben.

Die Aufgabe der Erfindung ist es daher ein verbessertes Bearbeitungsverfahren zur Herstellung einer Lauffläche auf einer Zylinderwand eines Zylinderliners einer Hubkolbenbrennkraftmaschine, insbesondere eines langsam laufenden Zweitakt-Grossdieselmotors bereitzustellen, bei welchem ein Ausbrechen der Hartphasen, sowohl während der Durchführung des Bearbeitungsverfahrens selbst, als auch beim späteren Betrieb des Zylinderliner weitestgehend verhindert wird, wobei das Ölrückhaltevolumen der Lauffläche optimiert und eine Verteilung des Schmierölfilms auf der Lauffläche verbessert wird, und gleichzeitig eine ausreichende Dynamik in Bezug auf Richtung und Fliessgeschwindigkeit einer Bewegung des Schmieröls beim Fliessen auf der Lauffläche im Betriebszustand des Zylinderliners gewährleistet wird. Darüber hinaus ist es eine Aufgabe der Erfindung einen entsprechenden Zylinderliner bereitzustellen.

Die diese Aufgaben in verfahrenstechnischer und apparativer Hinsicht lösenden Gegenstände der Erfindung sind durch die Merkmale des unabhängigen Anspruchs der jeweiligen Kategorie gekennzeichnet.

Die abhängigen Ansprüche beziehen sich auf besonders vorteilhafte Ausführungsformen der Erfindung.

Die Erfindung betrifft somit ein Bearbeitungsverfahren zur Herstellung einer Lauffläche auf einer Zylinderwand eines Zylinderliners einer Hubkolbenbrennkraftmaschine, insbesondere eines langsam laufenden Zweitakt-Grossdieselmotors, in welchem Zylinderliner im Einbauzustand ein Kolben in Richtung einer Zylinderachse entlang der Lauffläche hin- und herbewegbar angeordnet ist. Das Bearbeitungsverfahren umfasst dabei die folgenden Schritte: Bereitstellung eines Zylinderliner Rohlings und Drehbearbeitung der Zylinderwand mittels eines Drehwerkzeugs, wobei das Drehwerkzeug und die Zylinderwand mit einer vorgegeben Rotationsgeschwindigkeit um die Zylinderachse, und gleichzeitig in axialer Richtung mit einer vorgegebenen Vorschubgeschwindigkeit entlang der Zylinderachse relativ zueinander zerspanend bewegt werden, so dass in der Zylinderwand in Umfangsrichtung durch ein Feinstdrehen in einem Feinbearbeitungsschritt in der Zylinderwand in Umfangsrichtung eine kapillarartige Feinstruktur mit umlaufenden Kapillaren erzeugt wird. Die kapillarartige Feinstruktur erstreckt sich dabei schraubenförmig entlang der Zylinderachse in der Zylinderwand des Zylinderliners. Erfindungsgemäss werden in einem Querbearbeitungsverfahren derart Querverbindungen zwischen den umlaufenden Kapillaren der kapillarartigen Feinstruktur geschaffen, dass die kapillarartige Feinstruktur im wesentlichen erhalten bleibt.

Der Erfindung liegt die wesentliche Erkenntnis zugrunde, dass durch das Erhalten der umlaufenden Kapillaren bei der Anwendung des erfindungsgemässen Querbearbeitungsverfahrens einerseits ein Ausbrechen der Hartphasen, sowohl während der Durchführung des Bearbeitungsverfahrens selbst, als auch beim späteren Betrieb des Zylinderliner weitestgehend verhindert wird, wobei das Ölrückhaltevolumen der Lauffläche optimiert und eine Verteilung des Schmierölfilms auf der Lauffläche verbessert wird, und gleichzeitig eine ausreichende Dynamik in Bezug auf Richtung und Fliessgeschwindigkeit einer Bewegung des Schmieröls beim Fliessen auf der Lauffläche im Betriebszustand des Zylinderliners gewährleistet wird.

Das wird einerseits durch die in Umfangsrichtung in der Lauffläche des Zylinderliners umlaufende Kapillarstruktur gewährleistet, die aufgrund ihrer Kapillareigenschaften hervorragende Kapillareigenschaften aufweist und dadurch den Ölfilm optimal an die Lauffläche des Zylinderliners bindet und andererseits eine Fliessdynamik des Schmieröls auf der Lauffläche in Umfangsrichtung ausreichend unterstützt und gewährleistet. Da durch das erfindungsgemässe Querbearbeiten gleichzeitig zwischen zwei benachbarten umlaufenden Kapillaren eine Vielzahl von Querverbindungen geschaffen werden, ist auch ein effektiver und ausreichender Austausch und eine gleichmässige Verteilung des Schmieröls zwischen den Kapillaren stets gewährleistet.

Somit wird durch das erfindungsgemässe Verfahren einerseits ein ausreichendes Ölrückhaltevolumen in der Lauffläche des Zylinderliners bereitgestellt, wobei gleichzeitig sowohl die Fliessdynamik als auch die Verteilung und die Bindung des Schmierölfilms an die Lauffläche optimiert wird. Andererseits wird durch das äusserst schonende Bearbeitungsverfahren der vorliegenden Erfindung eine Schädigung der Lauffläche durch ein Herausbrechen der Hartphasen weitestgehend verhindert.

Bei einem bevorzugten Ausführungsbeispiel eines erfindungsgemässen Verfahrens wird vor der Erzeugung der kapillarartigen Feinstruktur in einem Drehbearbeitungsschritt in der Zylinderwand in Umfangsrichtung eine kanalartige Grobstruktur mit umlaufenden Kanälen erzeugt wird, welche Grobstruktur sich entlang der Zylinderachse in der Zylinderwand des Zylinderliners schraubenförmig erstreckt. D.h., bevor die feine Kapillarstruktur durch Feinstdrehen in der Zylinderlauffläche erzeugt wird, wird die Innenfläche des Zylinderliner Rohlings zunächst grob ausgedreht und so von groben Unebenheiten, die beim Giessen des Rohlings entstanden sind, befreit

Bei einem für die Praxis besonders wichtigen Ausführungsbeispiel wird nach der Drehbearbeitungsschritt zur Herstellung der kanalartigen Grobstruktur und vor dem Feinstdrehen zur Herstellung der kapillarartigen Feinstruktur eine riefenartige Struktur mit umlaufenden Mikrokanälen erzeugt, welche riefenartige Struktur sich entlang der Zylinderachse in der Zylinderwand des Zylinderliners schraubenförmig erstreckt.

Das heisst, die erfindungsgemässe kapillarartige Feinstruktur wird in drei Schritten erzeugt, indem nacheinander jeweils die Struktur der Lauffläche verfeinert wird. Dieses spezielle Verfahren ist insbesondere besonders schonend in Bezug auf die Hartphasen. Dadurch, dass die Struktur der Oberfläche schrittweise verfeinert wird, werden praktische keine Hartpartikel oder Bereiche aus Hartphasen herausgebrochen, sondern die Oberfläche wird schonend immer feiner abgeschält, bis die erfindungsgemässe kapillarartige Feinstruktur vorliegt.

Bevorzugt wird in an sich bekannter Weise eine Verblechung an der Zylinderwand durch ein Plateauhonen nach einem, mehreren oder allen der vorgenannten Drehbearbeitungsschritte oder Honschritte entfernt, und / oder es können Spitzen zwischen den Kapillaren und / oder zwischen den Kanälen und / oder zwischen den Mikrokanälen auf eine vorgegebene Höhe reduziert werden, wie dem Fachmann ebenfalls an sich bekannt ist.

Dabei ist das Querbearbeitungsverfahren gemäss der vorliegenden Erfindung im speziellen ein Spiralhonen ist, das bevorzugt unter einem Winkel zwischen 20° und 80°, bevorzugt bei einem Winkel zwischen 30° und 75° erfolgt in Bezug auf eine Richtung senkrecht zur Zylinderachse erfolgt.

Dabei ist Spiralhonen besonders bevorzugt ein Dia-/SiC-Spiralhonen, das mit einer Dia-/SiC Steinqualität US-Mesh 100 bis 150 (entsprechend 149 µm bis 99 µm) durchgeführt wird. Dia-/SiC-Spiralhonen bedeutet dabei, dass das Spiralhonen mit einem Honwerkzeug durchgeführt wird, dessen das in an sich bekannter Weise aus einem Diamant-Siliziumcarbid Werkstoff aufgebaut ist.

Ebenfalls besonders wichtig für die Praxis ist dabei ein erfindungsgemässes Ausführungsbeispiel, bei welchem die Lauffläche der Zylinderwand mit einer abrasiven Bürste und / oder mit einem Korkstein, bevorzugt mit einer Korngrösse von US-Mesh 240 bis 600 (entsprechend 60 µm bis 23 µm) spiralgebürstet und / oder feinstgehont wird. Dabei kann das Spiralhonen, insbesondere das Dia-/SiC-Spiralhonen, und das Spiralbürsten mit der abrasiven Bürste und / oder das Feinsthonen mit dem Korkstein nach einer ausgewählten Reihenfolge nacheinander durchgeführt werden. Die Nachbehandlung oder das Finishing der Oberfläche mit der abrasiven Bürste oder dem Korkstein ist dabei vor allem mit Blick auf die Hartphasen besonders schonend und verhindert Ausbrüche aus der Oberfläche der Lauffläche.

Es versteht sich dabei, dass das Spiralhonen, insbesondere das Dia-/SiC-Spiralhonen, und das Spiralbürsten mit der abrasiven Bürste und / oder das Feinsthonen mit dem Korkstein auch gleichzeitig durchgeführt werden kann, indem zum Beispiel die Bürste und / oder der Korkstein und / oder das Dia/SiCHonwerkzeug an einem Kombinationswerkzeug, bevorzugt jeweils diagonal gegenüber angeordnet werden.

Die Erfindung betrifft weiterhin einen Zylinderliner für einen Zweitakt Grossdieselmotor, der nach einem erfindungsgemässen Bearbeitungsverfahren hergestellt ist. Der erfindungsgemässe Zylinderliner hat somit in der Zylinderwand in Umfangsrichtung eine durch ein Feindrehen in einem Feinbearbeitungsschritt in der Zylinderwand in Umfangsrichtung hergestellte kapillarartige Feinstruktur mit umlaufenden Kapillaren. Die kapillarartige Feinstruktur erstreckt sich dabei schraubenförmig entlang der Zylinderachse in der Zylinderwand des Zylinderliners. Erfindungsgemäss sind in einem Querbearbeitungsverfahren derart Querverbindungen zwischen den umlaufenden Kapillaren der kapillarartigen Feinstruktur vorgesehen, dass die kapillarartige Feinstruktur im wesentlichen erhalten bleibt.

Die Erfindung wird im folgenden an Hand der schematischen Zeichnung näher erläutert. Es zeigen:
- Fig. 1: einen Ausschnitt eines Längsschnitts durch eine Lauffläche eines erfindungsgemässen Zylinderliners;
- Fig. 2a - 2c: schematische Darstellung eines erfindungsgemässen vierstufiges Verfahrens;

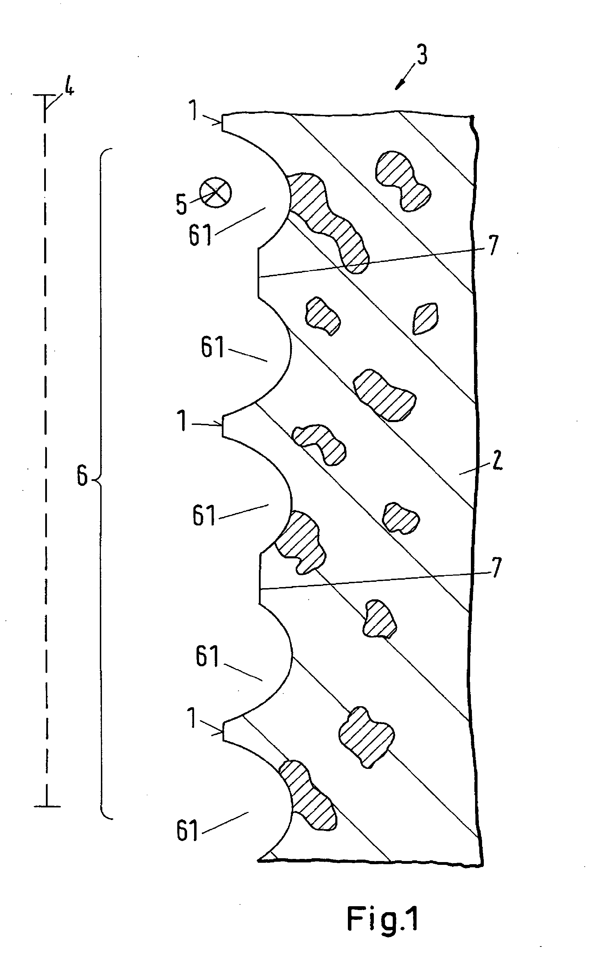

In Fig. 1 ist schematisch ein Ausschnitt eines Längsschnitts durch eine Lauffläche 1 eines erfindungsgemässen Zylinderliners 3 dargestellt, der nach einem besonders bevorzugten Ausführungsbeispiel eines erfindungsgemässen Verfahrens hergestellt wurde.

Deutlich zu erkennen ist die Lauffläche 1, die auf der Zylinderwand 2 eines Zylinderliners 3 eines langsam laufenden Zweitakt-Grossdieselmotors bereitgestellt ist. In bekannter Weise ist im Einbauzustand im Zylinderliner 3 ein in Fig. 1 nicht dargestellter Kolben angeordnet, der im Betriebszustand des Grossdieselmotors in Richtung der Zylinderachse 4 entlang der Lauffläche 1 hin- und herbewegt wird.

Die Lauffläche wurde dabei aus einem Zylinderliner Rohlings 31 mittels Drehbearbeitung der Zylinderwand 2 hergestellt, indem in drei Schritten zunächst eine kanalartige Grobstruktur 8 auf die zylinderförmige Innenfläche des Zylinderliner Rohlings 31 gedreht wurde. Sodann wurde durch Feindrehen die riefenartige Struktur 9 mit Mikrokanälen 91 in die Grobstruktur 8 eingearbeitet, anschliessend die kapillarartige Feinstruktur 6 erzeugt und abschliessend durch ein Querbearbeitungsverfahren, beispielsweise durch Spiralhonen mit einem Dia-/SiC Werkzeug und / oder durch Bearbeitung mit einem Korkstein und / oder einer abrasiven Bürste die Querverbindungen 7 zwischen den umlaufenden Kapillaren 6 zur Verbindung der Kapillaren 6 eingearbeitet.

Die Grobstruktur 8 und die riefenartige Struktur 9 sind natürlich in Fig. 1 nicht mehr zu erkennen, da die Grobstruktur 8 durch den Zwischenschritt der Herstellung der riefenartigen Struktur 9 entfernt wurde und entsprechend die riefenartige Struktur 9 durch das Feinstdrehen entfernt wurde, mit welchem Feinstdrehen die kapillarartige Feinstruktur 6 in die riefenartige Struktur 9 eingearbeitet wurde.

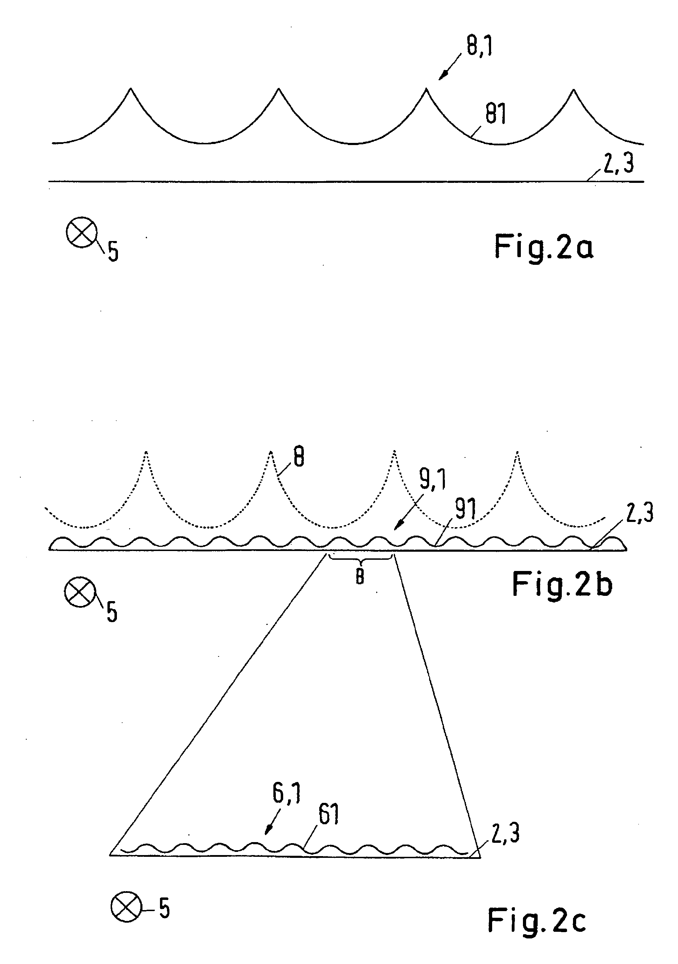

Anhand der Fig. 2a bis Fig. 2c soll noch einmal ein vierstufiges Ausführungsbeispiel eines erfindungsgemässen Verfahrens näher erläutert werden.

Fig. 2a zeigt schematisch einen Ausschnitt einer Zylinderwand 2 eines Zylinderliners 3 mit einer Grobstruktur 8, die in Umfangsrichtung 5 des Zylinderliners 3 umlaufende Kanäle 81 aufweist, welche Kanäle 81 in einem ersten Drehbearbeitungsschritt auf der Innenfläche des Zylinderliner Rohlings 31 hergestellt wurden.

Die Grobstruktur 8 wird dann gemäss Fig. 2b in einem zweiten Bearbeitungsschritt entfernt, indem mittels eines geeigneten Drehwerkzeugs die feinere riefenartige Struktur 9 mit den umlaufenden Mikrokanälen 91 in die kanalartige Grobstruktur 8 eingearbeitet wird, indem insbesondere eine kleinere Vorschubgeschwindigkeit für das Drehwerkzeug gewählt wird als zur Herstellung der Grobstruktur 8. Da bei Fig. 2b die Grobstruktur bereits nicht mehr vorhanden ist, ist die Grobstruktur 8 durch eine punktierte Linie 8 dargestellt.

Anschliessend wird an der Zylinderlauffläche 1 als zusätzlicher Bearbeitungsschritt ein Feinstdrehen angewendet. Das Ergebnis des erfindungsgemässen Feinstdrehens ist schematisch in Fig. 2c dargestellt, das die durch das Feinstdrehen hergestellte Struktur 6 mit den umlaufenden Kapillaren 61 in dem kleinen Bereich B der Lauffläche 1 zeigt.

Dafür wird eine runde Wendeschneidplatte mit positivem Schnittwinkel und einem minimalen Durchmesser von bevorzugt 19mm oder grösser verwendet, welche mit reduzierter Schnittgeschwindigkeit von 10m/min bis zu 50m/ min, bevorzugt mit 20m/min bis 30m/min, einer Spantiefe von 0.01 mm bis 0.07mm, bevorzugt 0.03mm bis 0.05mm und einem Vorschub von 0.1 mm bis 0.7mm, bevorzugt 0.3mm bis 0.5mm pro Rotation eine definierte Oberfläche erzeugt.

Ein wichtiger Vorteil dieser schonenden Art der Bearbeitung, insbesondere bei der Bearbeitung von Gusseisen mit Hartphasen, ist, dass die Hartphase deutlich weniger, im Speziellen gar nicht mehr geschädigt wird. Im Gegensatz zur Erfindung, wird im Stand der Technik eine Schneide benutzt, die einen starken Radialdruck ausübt, was wegen des unterschiedlichen E-Moduls von Perlit und Hartphase eine Zertrümmerung der Hartphase verursacht. Beim erfindungsgemässen Bearbeitungsverfahren liegt dagegen beim Drehen der Druck im wesentlichen in axialer Richtung an, das heisst der Druck des Drehwerkzeugs auf die Zylinderwand in axialer Richtung ist bevorzugt grösser als der Druck des Drehwerkzeugs auf die Zylinderwand in radialer Richtung, so dass die eventuell zerstörten Hartphasen im nächsten Moment wegbearbeitet werden und die im Grundmaterial verbleibenden Hartphasen unbeschädigt bleiben. Durch diese schonende Bearbeitung werden eine Verblechung der Oberfläche und eine Schädigung des keramischen Materialanteiles weitgehend vermieden. Diese Oberfläche ist Teil der Zylinderlauffläche 1 welche mit ihren Kapillaren 61 das Ölrückhaltevolumen Rvk zwischen 0.5µm bis 8µm, bevorzugt zwischen 1µm bis 4µm definiert welches für einen einwandfreien Kolbenlauf bevorzugt ist. Durch die quasi horizontale Lage dieser Kapillaren 61 wird ein gleichmässiger Schmierfilm bei gleichzeitiger Reduktion des Ölverbrauchs erreicht.

Um eine gleichmässige Schmierfilmverteilung auf der Zylinderlauffläche 1 zu erreichen müssen die Kapillaren 61 zusätzlich über die Querverbindungen 7, die im Herstellungsstadium der Fig. 2c noch nicht vorhanden sind, miteinander kommunizieren. Dies wird durch das erfindungsgemässe Spiralhonen mit einem Winkel zwischen 10° und 85°, bevorzugt zwischen 30° und 75° und einer Dia-/SiC-Steinqualität US-Mesh 100 bis 150 erreicht. Durch das vorgängige Feinstdrehen reduziert sich diese Honzeit erheblich, wodurch im Vergleich zum Stand der Technik die Herstellungskosten eines erfindungsgemässen Zylinderliners 3 erheblich reduziert sind.

Um eine definierte Laufflächenrauhigkeit zu erreichen und jegliche Verblechung, auch Plateau genannt, der Oberfläche auszuschliessen wird die Zylinderlauffläche 1 mit abrasiven Bürsten oder Korkstein Korngrösse US-Mesh 240 bis 600 spiralgebürstet bzw. feinstgehont. Durch das Bürsten werden zusätzlich mögliche lose keramische Materialanteile entfernt wodurch die Standzeiten bzw. die Lebensdauer des erfindungsgemässen Zylinderliners 3 im Vergleich zu den bekannten Zylinderlinern deutlich erhöht ist.

Situationsbedingt kann das Dia/SiC-Honen und das Bürsten/Kornstein-Feinsthonen in zwei separaten aufeinander folgenden Arbeitsgängen oder in einem Arbeitsgang ausgeführt werden. Wird dieses in einem Arbeitsgang ausgeführt wie das Dia-/SiC-Honen kann das Honwerkzeug diagonal gegenüber mit Bürsten/Korkstein-Bürsten/Korkstein als auch mit Bürsten/Korkstein und Dia-/SiC-Stein bestückt sein, was ebenfalls die Herstellungskosten weiter reduziert.

Durch das erfindungsgemässe Bearbeitungsverfahren wird somit nicht nur die Lebensdauer von Kolben, Kolbenringen und der Zylinderlauffläche signifikant erhöht, sondern der Schmiermittelverbrauch wird auch gleichzeitig minimiert und die Wartungsintervalle werden merklich verlängert und die Herstellungskosten gesenkt.

## Patentansprüche

1. Bearbeitungsverfahren zur Herstellung einer Lauffläche (1) auf einer Zylinderwand (2) eines Zylinderliners (3) einer Hubkolbenbrennkraftmaschine, insbesondere eines langsam laufenden Zweitakt-Grossdieselmotors, in welchem Zylinderliner (3) im Einbauzustand ein Kolben in Richtung einer Zylinderachse (4) entlang der Lauffläche (1) hin- und herbewegbar angeordnet ist, wobei das Bearbeitungsverfahren die folgenden Schritte umfasst: Bereitstellung eines Zylinderliner Rohlings (31) und Drehbearbeitung der Zylinderwand (2) mittels eines Drehwerkzeugs, wobei das Drehwerkzeug und die Zylinderwand (2) mit einer vorgegeben Rotationsgeschwindigkeit um die Zylinderachse (4) und gleichzeitig in axialer Richtung mit einer vorgegebenen Vorschubgeschwindigkeit entlang der Zylinderachse (4) relativ zueinander zerspanend bewegt werden, so dass in der Zylinderwand (2) in Umfangsrichtung (5) durch ein Feindrehen in einem Feinbearbeitungsschritt in der Zylinderwand (2) in Umfangsrichtung (5) eine kapillarartige Feinstruktur (6) mit umlaufenden Kapillaren (61) erzeugt wird, welche kapillarartige Feinstruktur (6) sich entlang der Zylinderachse (4) in der Zylinderwand (2) des Zylinderliners (3) schraubenförmig erstreckt, **dadurch gekennzeichnet, dass** in einem Querbearbeitungsverfahren derart Querverbindungen (7) zwischen den umlaufenden Kapillaren (61) der kapillarartigen Feinstruktur (6) geschaffen werden, dass die kapillarartige Feinstruktur (6) im wesentlichen erhalten bleibt.

2. Verfahren nach Anspruch 1, wobei vor der Erzeugung der kapillarartigen Feinstruktur (6), in einem Drehbearbeitungsschritt in der Zylinderwand (2) in Umfangsrichtung (5) eine kanalartige Grobstruktur (8) mit umlaufenden Kanälen (81) erzeugt wird, welche Grobstruktur (8) sich entlang der Zylinderachse (4) in der Zylinderwand (2) des Zylinderliners (3) schraubenförmig erstreckt.

3. Verfahren nach Anspruch 2, wobei nach dem Drehbearbeitungsschritt zur Herstellung der kanalartigen Grobstruktur (8) und vor dem Feindrehen zur Herstellung der kapillarartigen Feinstruktur (6) eine riefenartige Struktur (9) mit umlaufenden Mikrokanälen (91) erzeugt wird, welche riefenartige Struktur (9) sich entlang der Zylinderachse (4) in der Zylinderwand (2) des Zylinderliners (3) schraubenförmig erstreckt.

4. Verfahren nach einem der vorangehenden Ansprüche, wobei eine Verblechung an der Zylinderwand (2) durch ein Plateauhonen entfernt wird.

5. Verfahren nach einem der vorangehenden Ansprüche, wobei Spitzen zwischen den Kapillaren (61) und / oder zwischen den Kanälen (81) und /oder zwischen den Mikrokanälen (91) auf eine vorgegebene Höhe reduziert werden.

6. Verfahren nach einem der vorangehenden Ansprüche, wobei das Querbearbeitungsverfahren ein Spiralhonen ist, das bevorzugt unter einem Winkel zwischen 20° und 80°, bevorzugt bei einem Winkel zwischen 30° und 75° erfolgt.

7. Verfahren nach Anspruch 6, wobei das Spiralhonen ein Dia-/SiC-Spiralhonen mit einer Dia-/SiC Steinqualität 149 µm bis 99 µm durchgeführt wird.

8. Verfahren nach einem der vorangehenden Ansprüche, wobei die Lauffläche (1) der Zylinderwand (2) mit einer abrasiven Bürste und / oder mit einem Korkstein, bevorzugt mit einer Korngrösse von 60 µm bis 23 µm spiralgebürstet und / oder feinstgehont wird.

9. Verfahren nach einem der Ansprüche 6 bis 8, wobei das Spiralhonen, insbesondere Dia-/SiC-Spiralhonen, und das Spiralbürsten mit der abrasiven Bürste und / oder das Feinsthonen mit dem Korkstein nach einer ausgewählten Reihenfolge nacheinander durchgeführt werden.

10. Verfahren nach einem der Ansprüche 6 bis 9, wobei das Spiralhonen, insbesondere Dia-/SiC-Spiralhonen, und das Spiralbürsten mit der abrasiven Bürste und / oder das Feinsthonen mit dem Korkstein gleichzeitig durchgeführt werden.

11. Verfahren nach Anspruch 10, wobei die Bürste und / oder der Korkstein und / oder das Dia-/SiC-Honwerkzeug an einem Kombinationswerkzeug, bevorzugt jeweils diagonal gegenüber angeordnet werden.

12. Zylinderliner für einen Zweitakt Grossdieselmotor, hergestellt gemäss einem Verfahren nach einem der vorangehenden Ansprüche.

## Claims

1. A machining method for the manufacture of a running surface (1) on a cylinder wall (2) of a cylinder liner (3) of a reciprocating piston combustion engine, in particular of a slow running large two-stroke diesel engine, a piston being arranged to move in said cylinder liner (3) in the installed state to and fro along the running surface (1) in the direction of a cylinder axis (4), wherein the machining method includes the following steps: providing a cylinder liner blank (31) and turning processing of the cylinder wall (2) by means of a turning tool, wherein the turning tool and the cylinder wall (2) are moved about the cylinder axis (4) at a predetermined speed of rotation and at the same time are moved in chip forming manner relative to one another at a predetermined feed speed along the cylinder axis (4), so that a capillary-like fine structure (6) with circumferential capillaries (61) is produced in the cylinder wall (2) in the circumferential direction by fine turning in a fine machining step in the cylinder wall (2) in the circumferential direction (5), said capillary-like fine structure (6) extending helically along the cylinder axis (4) in the cylinder wall (2) of the cylinder liner (3), **characterised in that**, in a cross-machining process, cross connections (7) are manufactured between the circumferential capillaries (61) of the capillary-like fine structure (6) such that the capillary-like fine structure (6) is substantially maintained.

2. A method in accordance with claim 1 wherein, prior to the production of the capillary-like fine structure (6), a channel-like coarse structure (8) with circumferential channels (81) is produced in a turning process step in the cylinder wall (2) in the circumferential direction (5), said coarse structure (8) extending helically along the cylinder axis (4) in the cylinder wall (2) of the cylinder liner (3).

3. A method in accordance with claim 2, wherein, after the turning process step for the manufacture of the channel-like coarse structure (8) and prior to the fine turning for the manufacture of the capillary-like fine structure (6), a scoring structure (9) with circumferential micro-channels (91) is produced, said scoring structure (9) extending helically along the cylinder axis (4) in the cylinder wall (2) of the cylinder liner (3).

4. A method in accordance with any one of the previous claims,
wherein a sheet metal burr on the cylinder wall (2) is removed by means of a plateau honing step.

5. A method in accordance with any one of the previous claims,
wherein peaks between the capillaries (61) and/or between the passages (81) and/or between the micro-channels (91) are reduced to a predetermined height.

6. A method in accordance with any one of the previous claims,
wherein the cross machining procedure is a spiral honing which preferably takes place at an angle between 20° and 80°, preferably at an angle between 30° and 75°.

7. A method in accordance with claim 6, wherein the spiral honing is carried out as diamond/SiC spiral honing with a diamond/SiC stone quality 149 µm to 99 µm.

8. A method in accordance with any one of the previous claims,
wherein the running surface (1) of the cylinder wall (2) is spirally brushed and/or very finely honed with an abrasive brush and/or with a cork stone, preferably with a grain size of 60 µm to 23 µm.

9. A method in accordance with any one of the claims 6 to 8, wherein the spiral honing, in particular diamond/ SiC spiral honing and the spiral brushing with the abrasive brush and/or the very fine honing with the cork stone are carried out one after the other in a selected order.

10. A method in accordance with any one of the claims 6 to 9, wherein the spiral honing, in particular diamond/SiC spiral honing, and the spiral brushing with the abrasive brush and/or the very fine honing with the cork stone are carried out at the same time.

11. A method in accordance with claim 10, wherein the brush and/or the cork stone and/or the diamond/SiC honing tool are arranged on a combination tool, preferably diagonally opposite one another.

12. A cylinder liner for a large two-stroke diesel engine manufactured in accordance with a method in accordance with any one of the previous claims.

## Revendications

1. Procédé d'usinage pour la réalisation d'une surface de roulement (1) sur une paroi cylindrique (2) d'une chemise cylindrique (3) d'un moteur à combustion à pistons, plus particulièrement d'un gros moteur diesel deux temps, et dans cette chemise cylindrique (3) est disposé, dans l'état monté, un piston de manière mobile avec un mouvement de va-et-vient dans la direction d'un axe de cylindre (4) le long de la surface de roulement (1), le procédé d'usinage comprenant les étapes suivantes : réalisation d'une ébauche (31) de chemise cylindrique et tournage de la paroi cylindrique (2) à l'aide d'un tour, le tour et la paroi cylindrique (2) se déplaçant l'un par rapport à l'autre avec une vitesse de rotation prédéterminée autour de l'axe du cylindre (4) et en même temps dans la direction axiale avec une vitesse d'avance prédéterminée le long de l'axe du cylindre (4) avec l'enlèvement de copeaux, de façon à ce que, dans la paroi cylindrique (2), dans la direction périphérique (5), grâce à un tournage fin dans une étape de tournage fin dans la paroi cylindrique (2) dans la direction périphérique (5), une structure fine (6) de type capillaire avec des capillaires circulaires (61) soit produite, et cette structure fine (6) de type capillaire s'étend le long de l'axe du cylindre (4) dans la paroi cylindrique (2) de la chemise cylindrique (3) sous la forme d'un filetage, **caractérisé en ce que**, dans un procédé d'usinage transversal, des liaisons transversales (7) sont réalisées entre les capillaires circulaires (61) de la structure fine (6) de type capillaire, de façon à ce que la structure fine (6) de type capillaire reste essentiellement inchangée.

2. Procédé selon la revendication 1, une structure grossière (8) de type canal avec des canaux circulaires (81) étant réalisée avant la réalisation de la structure fine (6) de type capillaire, lors d'une étape de tournage dans la paroi cylindrique (2) dans la direction périphérique (5), cette structure grossière (8) s'étendant le long de l'axe du cylindre (4) dans la paroi cylindrique (2) de la chemise cylindrique (3) sous la forme d'un filetage.

3. Procédé selon la revendication 2, une structure (9) de type stries avec des micro-canaux circulaires (91) étant réalisée après l'étape de tournage pour la réalisation de la structure grossière (8) de type canal et avant le tournage fin pour la réalisation de la structure fine (6) de type capillaire, cette structure (9) de type stries s'étendant le long de l'axe du cylindre (4) dans la paroi cylindrique (2) de la chemise cylindrique (3) sous la forme d'un filetage.

4. Procédé selon l'une des revendications précédentes, une paroi en tôle sur la paroi cylindrique (2) étant éliminée par un polissage à plateau.

5. Procédé selon l'une des revendications précédentes, des pointes entre les capillaires (61) et/ou entre les canaux (81) et/ou entre les micro-canaux (91) étant réduites à une hauteur prédéterminée.

6. Procédé selon l'une des revendications précédentes, le procédé d'usinage transversal étant un polissage en spirale qui a lieu de préférence sous un angle entre 20° et 80°, de préférence à un angle entre 30° et 75°.

7. Procédé selon la revendication 6, le polissage en spirale étant un polissage en spirale Dia/SiC effectué avec une qualité de pierre Dia-SiC de 149 µm à 99 µm.

8. Procédé selon l'une des revendications précédentes, la surface de roulement (1) de la paroi cylindrique (2) étant brossée en spirale et/ou polie très finement avec une brosse abrasive et/ou du liège aggloméré, de préférence avec une taille de grains de 60 µm à 23 µm.

9. Procédé selon l'une des revendications 6 à 8, le polissage en spirale, plus particulièrement le polissage en spirale Dia/SiC et le brossage en spirale avec la brosse abrasive et/ou le polissage très fin avec le liège aggloméré, sont effectués l'un après l'autre dans un ordre sélectionné.

10. Procédé selon l'une des revendications 6 à 9, le polissage en spirale, plus particulièrement le polissage en spirale Dia/SiC et le brossage en spirale avec la brosse abrasive et/ou le polissage très fin avec le liège aggloméré, sont effectués simultanément avec le liège aggloméré.

11. Procédé selon la revendication 10, la brosse et/ou le liège aggloméré et/ou l'outil de polissage Dia/SiC sont disposés sur un outil combiné, de préférence avec une disposition en diagonale.

12. Chemise cylindrique pour un gros moteur diesel deux temps, réalisée selon un procédé selon l'une des revendications précédentes.
